# EUROPÄISCHE PATENTSCHRIFT

(11) **EP 1 004 121 B1**
(45) Veröffentlichungstag und Bekanntmachung des Hinweises auf die Patenterteilung: **17.10.2007**
(21) Anmeldenummer: 98945150.5
(22) Anmeldetag: 05.08.1998
(51) Int. Cl.: G21C 15/16, B01D 45/12

(54) **SEPARATOR FÜR EIN DAMPF-WASSER-GEMISCH UND ANORDNUNG MIT EINER MEHRZAHL VON SEPARATOREN**
SEPARATOR FOR A STEAM-WATER MIXTURE AND SYSTEM WITH A PLURALITY OF SEPARATORS
SEPARATEUR DESTINE A UN MELANGE VAPEUR/EAU ET DISPOSITIF DOTE D'UNE PLURALITE DE CES SEPARATEURS

(30) Priorität: 11.08.1997 DE 19734716
(43) Veröffentlichungstag der Anmeldung: 31.05.2000
(73) Patentinhaber: AREVA NP GmbH, 91058 Erlangen (DE)
(72) Erfinder: MESETH, Johann, D-64807 Dieburg (DE)
(74) Vertreter: Tergau & Pohl Patentanwälte
(86) Internationale Anmeldenummer: PCT/EP1998/004879
(87) Internationale Veröffentlichungsnummer: WO 1999/008287

(56) Entgegenhaltungen:
- DE-A- 2 433 274
- US-A- 3 324 634
- US-A- 3 902 876

## Beschreibung

Die Erfindung betrifft einen Separator und eine Anordnung von Separatoren für ein Dampf-Wasser-Gemisch, insbesondere für eine Kernkraftanlage und speziell für eine Siedewasserreaktoranlage.

Bei einem Siedewasserreaktor wird im Reaktordruckbehälter das durch den Reaktorkern strömende Kühlwasser erhitzt. Das Kühlwasser tritt dabei teilweise in die Dampfphase über, so daß ein Gemisch aus Dampf und Wasser aus dem Reaktorkern ausströmt. Bevor der Dampf zur Erzeugung von elektrischer Energie einer Turbine zugeführt wird, wird er von dem Wasser in einem im Reaktordruckbehälter angeordneten Separator abgetrennt (separiert).

Ein solcher Separator ist aus der US-PS 3,902,876 bekannt. Der bekannte Separator ist dreistufig aufgebaut und umfaßt drei strömungstechnisch seriell hintereinandergeschaltete Rotationskammern. Vor der ersten Rotationskammer ist eine drallerzeugende Struktur angeordnet. Das Gemisch aus Dampf und Wasser strömt dabei in axialer Richtung in den Separator ein. Mit Hilfe der drallerzeugenden Struktur wird eine Rotationsströmung mit einer radialen Strömungskomponente erzeugt. Die drei Rotationskammern sind zusammen mit der drallerzeugenden Struktur koaxial von einer zylinderförmigen Röhre umgeben. Jede der drei Rotationskammern weist einen Abströmring für das Wasser auf, welches durch einen Spalt zwischen der Röhre und den Rotationskammern entgegen der Strömungsrichtung des Gemisches geführt wird. In dem Spalt sind als Dampfsperren Strömungswiderstände angeordnet, die verhindern sollen, daß Dampf gemeinsam mit dem abströmenden Wasser den Separator verläßt.

Der bekannte Separator weist somit einen aufwendigen zweischalige Aufbau mit den Rotationskammern und der sie umgebenden Röhre sowie den dazwischen angeordneten Dampfsperren auf. Um einen ausreichenden Separations- oder Abscheidegrad, d.h. eine ausreichende Trennung des Dampf-Wasser-Gemisches in Dampf und Wasser zu erreichen ist zudem die komplizierte dreistufige Konstruktion erforderlich. Darüber hinaus ist die drallerzeugende Struktur zur Erzeugung der Rotationsströmung konstruktiv aufwendig gestaltet.

Aufgabe der Erfindung ist es, einen Separator für ein Dampf-Wasser-Gemisch anzugeben, der mit einem einfachen konstruktiven Aufbau einen hohen Separationsgrad gewährleistet. Eine weitere Aufgabe der Erfindung ist es, eine Anordnung mit einer Mehrzahl von Separatoren anzugeben.

Die auf den Separator gerichtete Aufgabe wird erfindungsgemäß durch die Merkmale von Anspruch 1 gelöst.

Die Ausgestaltung des Einlasses gewährleistet, daß das Gemisch bereits beim Einströmen in den Separator eine zur Längsachse radial gerichtete Strömungskomponente aufweist. Das Gemisch strömt also im wesentlichen radial in den Einlaß und somit in den Separator ein. Ein Umlenken der Strömungsrichtung von einer axialen in eine radiale Strömung innerhalb des Separators entfällt daher. Bei einem Umlenken würden zwangsläufig Wirbel und somit Strömungsdruckverluste und Energieverluste auftreten. Diese werden durch die bereits radiale Einströmung in den Einlaß vermieden.

Ein weiterer Vorteil der radialen Einströmung besteht darin, daß die Drallstruktur zum Erzeugen der Drall- oder Rotationsströmung einfach ausgeführt werden kann. Zusätzlich läßt sich mit einer radialen Einströmung eine Drall- oder Rotationsströmung mit einer sehr hohen Rotationsgeschwindigkeit einfach erzeugen. Die hohe Rotationsgeschwindigkeit bedingt eine sehr große Zentrifugalbeschleunigung, wodurch im Separationsbereich ein hoher Separationsgrad erreicht wird. Die hohe Rotationsgeschwindigkeit bewirkt hierbei eine nahezu vollständige Trennung oder Separation des Dampf-Wasser-Gemisches in separierten Dampf und Wasser, so daß der Dampf durch den Auslaß weitgehend als Sattdampf ausströmt. Das aufgrund seiner höheren Dichte wegen der Zentrifugalbeschleunigung radial nach außen abgetrennte Wasser verläßt den Separator über die Abströmöffnung nahezu ohne Dampfanteil.

In einer vorteilhaften Ausgestaltung besitzt der Separator im Einströmbereich, im Separationsbereich und im Ausströmbereich nur eine einzige Begrenzungswand, d.h. er weist nur einen einschaligen Aufbau auf. Für die Wirkungsweise des Separators ist keine zweite Schale, wie z.B. eine den Separator umgebende koaxial angeordnete Röhre, nötig. Der Separator zeichnet sich durch eine einfache Konstruktion aus, beispielsweise durch eine einfache zylinderförmige Kammer, mit der eine nahezu vollständige Trennung des Dampf-Wasser-Gemisches erreicht wird.

Bevorzugt erstreckt sich im wesentlichen senkrecht zur Längsachse eine Barriere, beispielsweise ein flächiges Blech, so daß das Gemisch an einem axialen Einströmen gehindert wird. Das Gemisch strömt vielmehr radial über zumindest eine seitliche Öffnung ein, die sich insbesondere in etwa parallel zur Längsachse erstreckt.

In einer weiteren vorteilhaften Ausgestaltung weist die Drallstruktur ein Prallelement auf, das in Richtung der Längsachse, d.h. in axialer Richtung, strömungstechnisch vor dem Separationsbereich angeordnet ist. Die Drallstruktur besitzt demnach senkrecht zur Längsachse eine Querschnittsfläche, durch die wirksam verhindert wird, daß das Gemisch axial, d.h. entlang der Längsachse, in den Separator eintreten kann. Infolge der Anordnung des Prallelementes ist das Gemisch gezwungen, das Prallelement zu umströmen, so daß das Gemisch zwangsläufig mit einer radialen Strömungskomponente versehen in den Separator einströmt. Zur Erzeugung der Drallströmung sind in der Drallstruktur Leitelemente angeordnet. Diese erstrecken sich zum einen von dem Prallelement in axialer Richtung bis zu dem Separationsbereich und zum anderen von einem äußeren Umfang bis zu einem inneren Umfang in Richtung der Längsachse.

Eine solche Drallstruktur mit Prallelement und Leitelementen weist den Vorteil auf, daß zur Erzeugung der Drallströmung einfache Leitelemente, beispielsweise Platten, verwendet werden können, ohne daß die Effektivität, d.h. der Abscheidegrad des Separators, beeinträchtigt wird. Eine komplizierte, dreidimensional gekrümmte drallerzeugende Struktur ist nicht notwendig.

Insbesondere ist es für eine einfache konstruktive Ausgestaltung zweckdienlich, wenn der innere und der äußere Umfang zwei konzentrisch um die Längsachse angeordnete Kreise mit einem inneren bzw. einem äußeren Radius sind.

Zur Erzeugung der Drallströmung bilden die Leitelemente vorteilhafterweise jeweils mit derjenigen Mittelpunktsgeraden, an der sie auf dem inneren Kreis enden, einen Winkel, der etwa im Bereich zwischen 75 ° und 90 ° liegt. In anderen Worten: Jedes einzelne Leitelement erstreckt sich von dem Kreis mit dem äußeren Radius bis zu dem Kreis mit dem inneren Radius und endet dort. Die Leitelemente sind also annähernd tangential am inneren Kreis angeordnet. Der Endpunkt des Leitelements auf dem inneren Kreis ist dabei zugleich der Schnittpunkt des inneren Kreises mit einer Mittelpunktsgeraden, d.h. einer Geraden, die durch den gemeinsamen Mittelpunkt des inneren und des äußeren Kreises verläuft. Die so definierte Mittelpunktsgerade und das Leitelement schließen an dem Endpunkt einen Winkel im angegebenen Bereich ein.

In einer besonders vorteilhaften Ausgestaltung stimmt der innere Radius weitgehend mit dem Abstand der Längsachse zu einem Grenzbereich zwischen dem Wasser und dem Dampf im Separationsbereich überein, wenn der Separationsbereich mit Nennlast durchströmt wird. Dies hat den Vorteil, daß das Gemisch bei einem Radius in den Separationsbereich eintritt, an dem sich der Grenzbereich zwischen Dampf und Wasser bei Nennlast einstellt. Dadurch wird die Ausbildung von Wirbeln weitestgehend vermieden, so daß sich die Rotationsströmung rasch ausbilden kann, und Reibungsverluste durch Wirbel in der Rotationsströmung kaum auftreten.

Die Abströmöffnung umfaßt vorteilhafterweise einen Ringspalt, der insbesondere entlang dem äußeren Umfang einer Separationskammer des Separators verläuft. Der äußere ringförmige Bereich der Separationskammer hat zur Längsachse den größten radialen Abstand und wird als Außenbereich bezeichnet. In diesem Außenbereich ist das Wasser weitestgehend dampffrei, so daß durch den Ringspalt nahezu ausschließlich Wasser austritt. Bevorzugt ist der Ringspalt hierbei von dem Grenzbereich zwischen dem Wasser und dem Dampf, an der ein Dampf-Wasser-Gemisch vorliegt, möglichst weit radial beabstandet.

In einer vorteilhaften Ausgestaltung ist der Auslaß zentrisch um die Längsachse, d.h. in einem zentralen Bereich um die Längsachse, angeordnet. In diesem zentralen Bereich ist der Dampf nahezu wasserfrei, so daß der Dampf durch den Auslaß nahezu als Sattdampf ausströmt. Vorzugsweise weist dieser zentrale Bereich daher einen Radius auf, der kleiner ist als der Abstand der Längsachse zu dem Grenzbereich zwischen Wasser und Dampf.

In einer weiteren vorteilhaften Ausgestaltung umfaßt der Auslaß ein sich in Richtung der Längsachse erstreckendes Abströmrohr. Durch dieses Abströmrohr kann der Dampf aus dem Separator herausgeführt werden, der beispielsweise innerhalb eines Reaktordruckbehälters einer Siedewasser-Kernkraftanlage zumindest teilweise unterhalb einer Füllstandshöhe einer Kühlflüssigkeit angeordnet ist. Durch das Abströmrohr wird vermieden, daß sich der vom Wasser abseparierte Dampf wieder mit dem im Reaktordruckbehälter als Kühlflüssigkeit befindlichen Wasser vermischt.

Um auch bei einer großen Gesamtbaulänge des Separators diesen beispielsweise bei Revisionsarbeiten ausbauen zu können, ist dieser vorteilhafterweise quer zu der Längsachse teilbar. Insbesondere wird hierdurch erreicht, daß der Separator, der während eines Brennelement-Wechsels beispielsweise in einem Becken zwischengelagert wird, nicht die Höhe des Beckens überschreitet. Die Teilbarkeit des Separators gewährleistet daher, daß bei Revisionsarbeiten der in dem Becken zwischengelagerte Separator vollständig von im Becken befindlichem Wasser umgeben ist.

In einer weiteren vorteilhaften Ausgestaltung weisen der Auslaß und/oder die Abströmöffnung Mittel zur Erhöhung des Strömungswiderstandes auf. Durch diese Mittel werden die Strömungsverhältnisse in dem Separator eingestellt, um die Stabilität des Reaktorbetriebes zu unterstützen.

Vorteilhafterweise erstreckt sich der Einströmbereich des Separators in den Kernbereich des Reaktorkerns. Der Separator ist hierzu insbesondere an einem Kerndeckel angeordnet, der zusammen mit einem Kernmantel den Reaktorkern umgibt. Die direkte Anordnung des Separators an den Kerndeckel besitzt den Vorteil, daß zwischen Kerndeckel und Separator keine weiteren strömungstechnischen Verbindungen notwendig sind. Somit kann das Gemisch aus dem Reaktorkern unmittelbar, und zwar mit einer radialen Strömungskomponente, über die Drallstruktur in den Separator einströmen.

Vorteilhafterweise werden in einer Kernkraftanlage eine Mehrzahl von Separatoren angeordnet, die strömungstechnisch parallel geschaltet nebeneinander angeordnet sind. Bevorzugt werden in einer Kernkraftanlage, die für eine thermische Leistung von etwa 2800 MW ausgelegt ist (entspricht in etwa der Auslegung für eine elektrische Leistung von 1000 MW) 19 Separatoren angeordnet. Hierdurch ist ein besonders günstiges Verhältnis zwischen konstruktivem Aufwand und Effektivität erzielt.

Bevorzugt hat eine erste Anzahl der Separatoren Drallstrukturen mit einem Drehsinn im Uhrzeigersinn und eine zweite Anzahl mit einem Drehsinn gegen den Uhrzeigersinn. In den Separatoren werden dadurch Drallströmungen mit Drehsinn im Uhrzeigersinn bzw. gegen den Uhrzeigersinn erzeugt. Insbesondere ist es von Vorteil, wenn etwa die Hälfte der Separatoren eine Drallstruktur mit Drehsinn im Uhrzeigersinn und die verbleibende Hälfte eine Drallstruktur mit entgegengesetztem Drehsinn aufweist. Bevorzugt weisen die Drallstrukturen benachbarter Separatoren entgegengesetzte Drehsinne auf. Aufgrund des unterschiedlichen Drehsinns der erzeugten Drallströmung wird der Drall der einzelnen Dampfströmungen nach dem Verlassen der Separatoren vernichtet. Die Drallströmungen der einzelnen Separatoren mit unterschiedlichem Drehsinn heben sich also in ihrer Wirkung gegenseitig auf, so daß der Dampf nach den Separatoren als weitgehend drallfreie Strömung vorliegt. In weiterführenden Dampfleitungen sind daher keine drallvernichtenden Strukturen notwendig.

Die Erfindung wird im folgenden anhand der Ausführungsbeispiele der Zeichnung erläutert. Es zeigen:
- FIG 1: einen schematischen Querschnitt durch einen Separator,
- FIG 2: einen schematischen Schnitt senkrecht zur Längsachse durch die Drallstruktur.
- FIG 3: einen schematischen Ausschnitt aus einem Reaktordruckbehälter einer Siedewasserreaktor-Kernkraftanlage mit einer Mehrzahl von Separatoren,

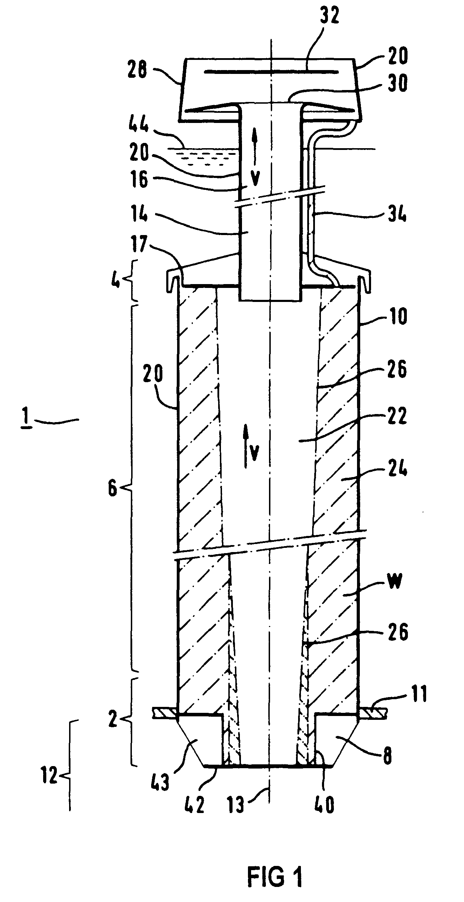

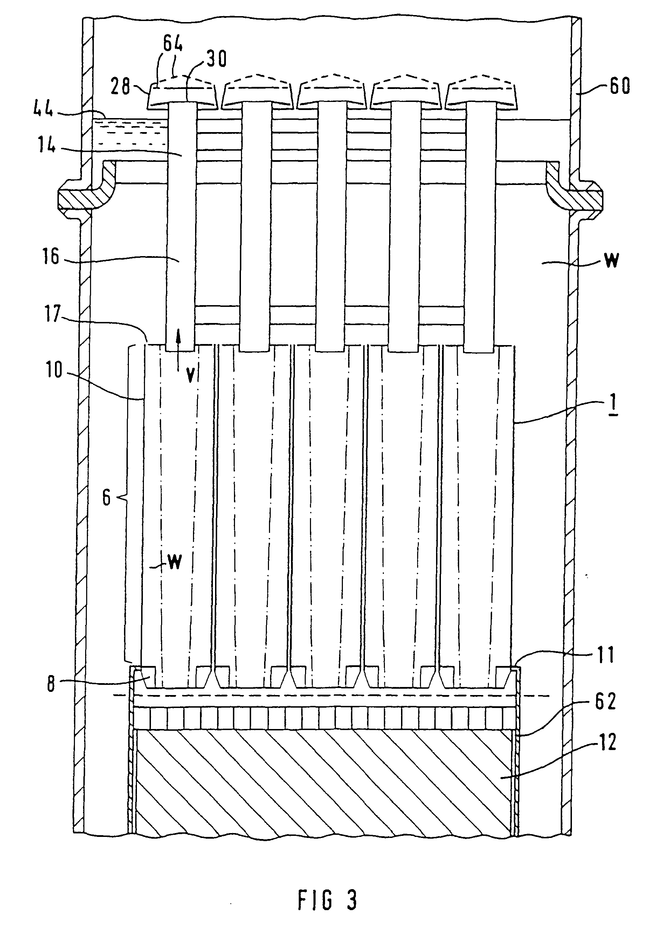

Gemäß der Figur 1 weist der Separator 1 einen Einströmbereich 2, einen Ausströmbereich 4 und einen dazwischen angeordneten Separationsbereich 6 auf. Im Einströmbereich 2 ist ein Einlaß 8 angeordnet, durch den ein Dampf-Wasser-Gemisch in den Separator 1 einströmt. Dem Einlaß 8 ist strömungstechnisch eine Separationskammer 10 nachgeschaltet, die auf einem Kerndeckel 11 eines nicht näher dargestellten Reaktorkerns einer Siedewasser-Kernkraftanlage angeordnet ist. Der Einlaß 8 und der Einströmbereich 2 erstrecken sich in den vom Kerndeckel 11 und einem Kernmantel 62 (vgl. Figur 3) begrenzten Kernbereich 12 des Reaktorkerns hinein. Die Separationskammer 10 ist bevorzugt rotationssymmetrisch und insbesondere zylinderförmig. Sie weist eine Längsachse 13 auf, entlang derer sie durchströmbar ist. Die Separationskammer 10 umfaßt den Separationsbereich 6 sowie teilweise den Einströmbereich 2 und den Ausströmbereich 4. Mit dem Ausströmbereich 4 steht ein Auslaß 14 strömungstechnisch in Verbindung. Der Auslaß 14 weist ein Abströmrohr 16 auf, das in der Separationskammer 10 mündet und sich teilweise in sie hinein erstreckt. Am oberen Rand der Separationsk_ammer 10 im Ausströmbereich 4 ist weiterhin eine Auslaßöffnung 17 angeordnet, die bevorzugt als Ringspalt ausgebildet ist. Der Separator weist als wesentliches Merkmal einen einschaligen Aufbau auf, d.h. er ist in radialer Richtung nur von einer einzigen Begrenzungswand 20 begrenzt.

Während des Betriebes bilden sich in der Separationskammer 10 drei weitgehend zylindrische und koaxiale Wirkbereiche aus, die sich entlang der Längsachse 13 erstrecken. Dies sind ein um die Längsachse 13 angeordneter Zentralbereich 22 und ein um diesen Zentralbereich 22 koaxial angeordneter Außenbereich 24 sowie ein zwischen ihnen angeordneten Grenzbereich 26. Im Zentralbereich 22 strömt vorwiegend Dampf v und im Außenbereich 24 vorwiegend Wasser w, das in der Figur 1 schraffiert dargestellt ist. Die zwei Bereiche sind durch den Grenzbereich 26, der sich zwischen Wasser w und Dampf v ausbildet, voneinander getrennt. Zum Ausströmbereich 4 hin nimmt der Durchmesser des Zentralbereiches 22 aufgrund der geodätischen Druckverhältnisse zu.

Das im Kernbereich 12 befindliche Gemisch aus Dampf v und Wasser w strömt durch den Einlaß 8 unter Ausbildung einer Drall- oder Rotationsströmung in die Separationskammer 10 ein. Infolge der Rotation des Gemisches und der damit verbundenen Zentrifugalkräfte wird das im Gemisch befindliche Wasser w aufgrund seiner höheren Dichte nach außen gedrängt und sammelt sich im Außenbereich 24 an. Im Zentralbereich 22 bleibt der Dampf v mit der geringeren spezifischen Dichte zurück. Das vom Dampf v abseparierte Wasser w verläßt die Separationskammer 10, nachdem es sie in Richtung ihrer Längsachse 13 durchströmt hat, über die ringspaltförmige Abströmöffnung 17. Der Dampf v verläßt den Separator über den Auslaß 14 und das Abströmrohr 16. Für eine möglichst vollständige Trennung ist die Abströmöffnung 17 am äußeren Rand der Separationskammer 10 angeordnet, d.h. die Abströmöffnung 17 ist so weit wie möglich von dem Zentralbereich 22, in dem sich der Dampf v befindet, beabstandet. Umgekehrt ist das Abströmrohr 16 für den Dampf v möglichst zentrisch um die Längsachse 13 herum angeordnet, so daß der Auslaß 14 so weit wie möglich von dem Außenbereich 24, in dem sich das Wasser w befindet, beabstandet ist. Durch diese Anordnung von Abströmöffnung 17 und Abströmrohr 16 ist ein hoher Abscheidegrad, d.h. eine weitestgehende Trennung des Gemisches möglich.

Zur weiteren Erhöhung des Abscheidegrades ist gemäß Figur 1 am Ende des Abströmrohres 16 ein Abscheideelement 28 nachgeschaltet. Das Abscheideelement 28 ist in etwa eine zylinderförmige Kammer, die nach oben hin offen ist, und in die sich das Abströmrohr 16 erstreckt. In Strömungsrichtung des Dampfes v ist gegenüber der Öffnung 30 des Abströmrohres 16, aus der der Dampf v austritt, ein Prallblech 32 angeordnet. Das Prallblech 32 bewirkt ein abruptes Abbremsen der axialen Strömungskomponente des Dampfes v entlang der Längsachse 13. Der Dampf v strömt somit radial nach außen und um das Prallblech 32 herum. Bei dieser abrupten Richtungsänderung erfährt der Dampf v hohe Beschleunigungswerte, so daß evtl. noch in dem Dampf v vorhandenes Wasser w aufgrund seiner höheren Dichte abgeschieden wird. Abgeschiedenes Wasser w sammelt sich am Boden des Abscheideelements 28 und verläßt dieses über eine Entwässerungsleitung 34, die beispielsweise wieder in die Separationskammer 10 mündet.

Der Einlaß 8 umfaßt eine Drallstruktur 40, die ein Prallelement 42 umfaßt. Das Prallelement 42 weist eine sich senkrecht zur Längsachse 13 erstreckende Querschnittsfläche auf. Das Prallelement 42 ist beispielsweise ein einfaches Blech und ist vorteilhafterweise kreisrund und zentrisch um die Längsachse 13 angeordnet. Das Prallelement 42 ist am unteren Ende des Separators 1 angeordnet und bildet das eingangsseitige Ende des Einlasses 8. Das Prallelement 42 stellt eine Barriere für eine axiale Strömung dar. Neben dem Prallelement 42 weist der Einlaß 8 eine oder mehrere seitliche Öffnungen 43 auf, durch die das Gemisch radial einströmt. Das im Kernbereich 12 vorhandene Gemisch strömt also zwangsläufig radial durch den Einlaß 8 in den Separator 1 ein. Es kann in diesen nicht axial, d.h. in Richtung der Längsachse 13, einströmen. Aufgrund der bereits radialen Einströmungskomponente kann mit einfachen Mitteln in der Drallstruktur 40 eine Rotationsströmung mit einer tangentialen Strömungskomponente erzeugt werden. Es sind hierdurch keine aufwendig gekrümmten, dreidimensionalen Flächen oder drallerzeugende Strukturen notwendig, um eine axiale Strömung des Gemisches in eine Rotationsströmung umzuwandeln.

Der Separator 1 hat für einen Einsatz in einer Siedewasserreaktor-Kernkraftanlage entlang seiner Längsachse 13 beispielsweise eine Längsausdehnung von etwa 10 m. Davon entfallen 0,5 m auf den Einlaß 8, etwa 5 m auf die Separationskammer 10 und 4,5 m auf das Abströmrohr 16 mit dem nachgeschalteten Abscheideelement 28. Die Füllstandshöhe 44 im Reaktordruckbehälter 60 (vgl. auch Figur 3) befindet sich dabei etwa 3,5 m oberhalb der Separationskammer 10, und damit unterhalb des Abscheideelements 28, durch das der Dampf v den Separator 1 verläßt. Das Prallelement 42 besitzt z.B. einen Durchmesser von 0,75 m, die Separationskammer 10 einen Durchmesser von 1,1 m, das Abströmrohr 16 einen Durchmesser von 0,35 m und das Abscheideelement 28 einen Durchmesser von 1,1 m. Wird ein solcher Separator 1 mit Nennlast betrieben, so weist der Zentralbereich 22 in der Nähe des Einströmbereiches 2 einen Durchmesser von etwa 0,45 m auf, der sich zum Ausströmbereich auf etwa 0,6 m vergrößert.

Da die Füllstandshöhe 44 oberhalb des Einlasses 8 liegt, werden die erwähnten Vorteile der radialen Einströmung in den Einlaß 8 besonders gut ausgenutzt. Denn das Gemisch steht unter Druck, so daß es im wesentlichen ohne Umlenken in den Einlaß 8 einströmt, welcher quasi in das Gemisch eingetaucht ist.

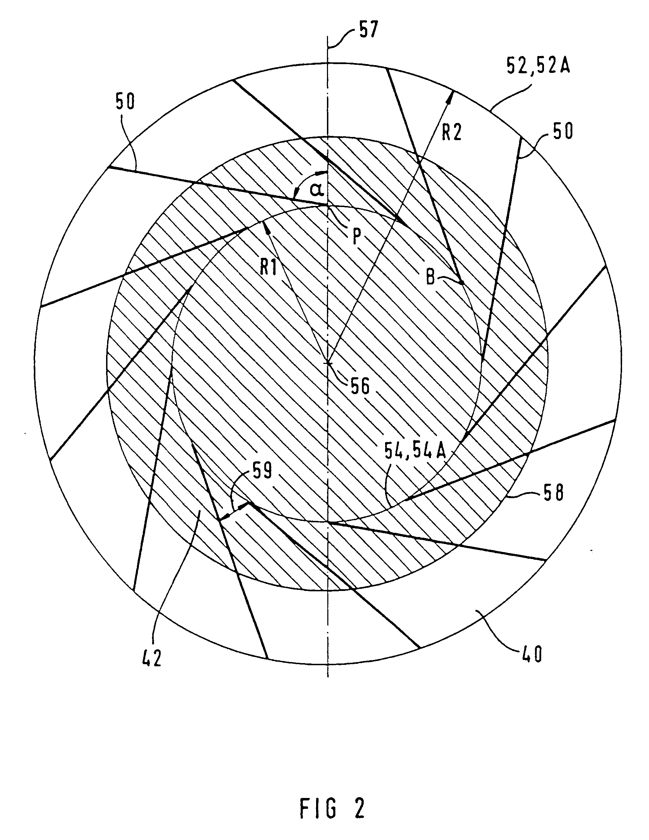

Gemäß Figur 2, die einen schematischen Schnitt A-A (vgl. Figur 1) durch die Drallstruktur 40 zeigt, erstrecken sich Leitelemente 50 von einem äußeren Umfang 52, insbesondere von einem äußeren Kreis 52A, zu einem inneren Umfang 54, insbesondere zu einem inneren Kreis 54A. Äußerer Kreis 52A und innerer Kreis 54A besitzen einen gemeinsamen Mittelpunkt 56, der auf der Längsachse 13 liegt, und um den sie konzentrisch angeordnet sind. Die Leitelemente 50 sind beispielsweise einfache ebene Bleche. Um den Aufbau der Drallströmung zu unterstützen, können sie auch gekrümmt sein. Die Leitelemente 50 stehen senkrecht auf dem Prallelement 42, welches in Figur 2 schraffiert dargestellt ist. Das Prallelement 42 ist kreisrund und weist einen Radius auf, der zwischen dem des inneren Kreises 52A und dem des äußeren Kreises 54A liegt. Die Leitelemente 50 sind daher nur in ihrem vorderen, zum inneren Kreis 54A hin gerichteten Bereich senkrecht auf dem Prallelement 40 angeordnet und stehen über den äußeren Rand 58 der Prallplatte 42 über.

Die Leitelemente 50 schließen mit derjenigen Mittelpunktsgeraden 57, auf die sie auf dem inneren Kreis 54A stoßen, einen Winkel α ein. In anderen Worten: Ein ausgewähltes Leitelement 50 erstreckt sich von dem äußeren Kreis 52A zu dem inneren Kreis 54A und endet dort. In dem Endpunkt B, auf dem das Leitelement 50 auf dem inneren Kreis 54A endet, schneidet die Mittelpunktsgerade 57 den inneren Kreis 54A in einem Schnittpunkt P. Die Mittelpunktsgerade 57 ist eine Gerade durch den Mittelpunkt 56. Die so definierte Mittelpunktsgerade 57 schließt mit dem Leitelement 50 einen Winkel α ein. Der Winkel α liegt vorzugsweise zwischen 75 ° und 90 °. Gemäß der Figur 2 sind auf dem Prallelement 42 insgesamt 12 gerade Leitelemente 50 angeordnet, die einen Winkel α von etwa 80 ° zu der jeweilig zugeordneten Mittelpunktsgeraden 57 aufweisen. Bevorzugt weist der äußere Kreis 52A einen Durchmesser von etwa 0,85 m und der innere Kreis 54A einen Durchmesser von etwa 0,45 m auf. Bei einer Anordnung von 12 Leitelementen 50 und einem Winkel α von 80 ° ergibt sich somit ein Eintrittsspalt 59 von etwa 45 mm. Der Eintrittsspalt 59 ist definiert als der kürzeste Abstand zwischen zwei Leitelementen 50.

Infolge der annähernd tangentialen Anordnung der Leitelemente 50 am inneren Kreis 54A erfährt das zunächst in Richtung auf den Mittelpunkt 56 radial einströmende Gemisch einen Drall, so daß sich eine Rotationsströmung ausbilden kann. Der Drehsinn der Rotationsströmung richtet sich dabei nach der Anordnung der Leitelemente 50 in der Drallstruktur 40. Der Drehsinn kann bei gleicher Funktionsfähigkeit des Separators sowohl im Uhrzeigersinn als auch gegen den Uhrzeigersinn gewählt werden.

Figur 3 zeigt eine Anordnung einer Mehrzahl von Separatoren 1 in einem nur ausschnittsweise dargestellten Reaktordruckbehälter 60 einer Kernkraftanlage, insbesondere einer Siedewasserreaktoranlage. In Figur 3 sind beispielhaft fünf Separatoren 1 gezeigt. Die Separatoren 1 sind am Kerndeckel 11, der zusammen mit dem Kernmantel 62 den Kernbereich 12 umschließt, angeordnet. Der Einlaß 8 der Separatoren 1 ist jeweils im Kernbereich 12 angeordnet. Der Dampf v wird über die Abströmrohre 16 in den Dampfraum über der Füllstandshöhe 44 des Kühlwassers eingeleitet. In einer bevorzugten Ausführungsform ist der Kerndeckel 11 etwa 8 m über dem nicht näher dargestellten Boden des Reaktordruckbehälters 60 angeordnet. Die Separationskammern 10 erstrecken sich vom Kerndeckel 11 aus mit einer Länge von etwa 5 m. An die Separationskammern 10 schließen sich die Abströmrohre 16 mit den Abscheideelementen 28 an, die zusammen mit den Separationskammern 10 etwa eine Längsausdehnung von 4,5 m aufweisen. Bei diesen Abmessungen liegen die Öffnungen 30 für den Dampf v oberhalb der Füllstandshöhe 44, die etwa 16,5 m oberhalb des Bodens des Reaktordruckbehälters 60 liegt. Die Separatoren 1 weisen zueinander bevorzugt einen Abstand von etwa 1,1 m auf. Des weiteren sind die Separatoren 1 vorteilhafterweise im Bereich zwischen der Separationskammer 10 und dem Abströmrohr 16 teilbar.

Die Separatoren 1 sind strömungstechnisch parallel geschaltet nebeneinander angeordnet, d.h. in jeden einzelnen Separator 1 tritt aus dem Kernbereich 12 gleichzeitig das Gemisch aus Dampf v und Wasser w ein. Bei der parallelen Schaltung von mehreren Separatoren 1 ist es besonders vorteilhaft, wenn der Auslaß 14 und/oder die Abströmöffnung 17 Mittel zur Erhöhung des Strömungswiderstandes aufweisen bzw. aufweist. Der Strömungswiderstand kann beispielsweise erhöht werden, indem die Breite des Ringspaltes der Abströmöffnung 17 klein gewählt wird und z.B. 28 mm beträgt. Der Strömungswiderstand am Auslaß 14 wird beispielsweise dadurch erhöht, daß die durchströmbare Fläche für den aus der Öffnung 30 im Abscheideelement 28 austretenden Dampf v verringert wird. Dies wird beispielsweise durch die Anordnung eines Lochbleches 64 erreicht, durch das der Dampf v strömt, bevor er den Separator 1 verläßt. Das Lochblech 64 ist strömungstechnisch hinter dem Prallblech 32 angeordnet und weist vorzugsweise eine freie Fläche von etwa 0,15 m² auf. Es ist zweckdienlich, zusätzlich um das Prallblech 32 herum ein weiteres ringförmiges Lochblech 64 mit einer durchströmbaren Fläche von etwa 0,08 m² anzuordnen.

Ein Separator 1 ohne solche Strömungswiderstände weist nicht zuletzt aufgrund seiner einfachen konstruktiven Ausgestaltung eine fallende Strömungscharakteristik auf, d.h. der Strömungswiderstand des Separators 1 nimmt mit zunehmendem Durchsatz von Dampf v und Wasser w durch den Separator 1 ab. Bei der Anordnung von mehreren parallel nebeneinander angeordneten Separatoren 1 bedeutet dies, daß bei geringfügigen Schwankungen des Durchsatzes durch einen Separator 1 dessen Strömungswiderstand abnimmt. Dadurch strömt noch mehr Gemisch in diesen Separator 1 ein und der Strömungswiderstand nimmt weiter ab usw.. Durch die Anordnung der Strömungswiderstände wird die fallende Strömungscharakteristik in eine steigende Strömungscharakteristik überführt, d.h. mit Hilfe dieser Strömungswiderstände nimmt der Strömungswiderstand des Separators 1 mit zunehmendem Durchsatz zu.

Bevorzugt weist eine Hälfte der Drallstrukturen 40 der Separatoren 1 einen Drehsinn im Uhrzeigersinn und die andere Hälfte der Drallstrukturen 40 einen Drehsinn gegen den Uhrzeigersinn zur Erzeugung von Drallströmungen in den Separatoren 1 mit unterschiedlichem Drehsinn auf. Es ist zweckdienlich, wenn die Drallströmung in benachbarten Separatoren 1 einen gegensätzlichen Drehsinn oder eine gegensätzliche Drehrichtung aufweisen. Dadurch ist gewährleistet, daß die aus den Separatoren 1 austretende Dampfströmung als Ganzes keinen Drall besitzt, d.h. die einzelnen Drallströmungen der Separatoren 1 heben sich gegenseitig auf.

Bei einem Siedewasserreaktor, der für eine thermische Leistung von etwa 2800 MW ausgelegt ist (entspricht etwa der Auslegung für eine elektrische Leistung von 1000 MW), sind in einer besonders vorteilhaften Ausgestaltung mit den bereits angegebenen geometrischen Größen im Reaktordruckbehälter 60 insgesamt 19 Separatoren 1 angeordnet. Die Anordnung von lediglich 19 Separatoren 1 hat den Vorteil, daß das gesamte Gemisch, das im Kernbereich 12 gebildet wird, durch die 19 Einlässe 8 der jeweiligen Separatoren 1 einströmen muß. Insofern ist die Einströmfläche für das Gemisch in die Separatoren 1 relativ klein, was zu einer sehr hohen Einströmgeschwindigkeit führt.

Durch die Drallstruktur 40 wird diese sehr hohe Einströmgeschwindigkeit in eine sehr hohe Rotationsgeschwindigkeit umgewandelt. Diese hohe Rotationsgeschwindigkeit bewirkt eine sehr gute Trennung des Dampf-Wasser-Gemisches in Dampf v und Wasser w. Des weiteren wird hierdurch wirksam "carry under", d.h. das Vorhandensein von Dampfblasen im abseparierten Wasser w, vermieden. Ebenso ist "carry over", d.h. das Vorhandensein von Wasser w in dem Dampf v, wirksam vermieden. Als ein wesentlicher Vorteil ergibt sich hieraus, daß der aus dem Separator 1 abströmende Dampf v weitgehend frei von Wasser w ist, also nahezu als Sattdampf ausströmt. Dadurch sind nachgeschaltete Dampftrockner nicht notwendig. Die sehr gute Separation des Gemisches wird zudem durch den langen Separationsbereich 6 unterstützt, der in etwa der Länge der Separationskammern 10, nämlich 5 m, entspricht.

Ein weiterer wesentlicher Vorteil des Separators 1 mit dem langen und großen Separationsbereich 6 besteht darin, daß der Separator 1 eine relativ große Zeitkonstante aufweist. Als Zeitkonstante wird hier die Zeit verstanden, die der Separator 1 benötigt, um auf einen veränderten Volumenstrom des Gemisches zu reagieren. Die Zeitkonstante ist also die Zeitspanne, die bei einer Änderung des in den Separator 1 einströmenden Volumenstroms verstreicht, bis der aus dem Separator 1 abströmende Volumenstrom mit dem einströmenden Volumenstrom übereinstimmt und der Separator 1 wieder stationär durchströmt wird. Aufgrund seiner Baulänge stellt der Separator 1 einen gewissen Puffer für sich ändernde Volumenströme dar und weist daher eine hohe Zeitkonstante von etwa 10 s auf.

Dies ist ein entscheidender Vorteil für die Stabilität des Reaktorbetriebs. Insbesondere im unteren Leistungsbereich des Reaktors oder bei Änderungen der Reaktorleistung, insbesondere beim An- oder Abfahren, kann es während des Reaktorbetriebs zu Instabilitäten kommen. Solche Instabilitäten sind dadurch gekennzeichnet, daß Leistungsschwankungen auftreten. Mit den Leistungsschwankungen sind Schwankungen bei der Erzeugung des Dampf-Wasser-Gemisches verbunden. Diese Schwankungen haben typischerweise eine Zeitkonstante von etwa 1 s. Solche Instabilitäten sind nach Möglichkeit zu vermeiden, da durch die abrupte und schnelle Leistungs- und damit verbundene Lastwechsel viele Komponenten des Reaktors, und insbesondere die Brennelemente, stark beansprucht werden. Infolge der etwa um den Faktor 10 höheren Zeitkonstante des Separators 1 wirkt dieser als Puffer und kann die Leistungsschwankungen dämpfen. Aufgrund der unterschiedlichen Zeitkonstanten ist also ein für den Reaktorbetrieb gefährlicher Resonanzeffekt, der die Leistungsschwankungen verstärken würde, ausgeschlossen.

## Patentansprüche

1. Kernkraftanlage, insbesondere Siedewasser-Kernkraftanlage, mit einem Kernbereich (12), der von einem Kerndeckel (11) und einem Kernmantel (62) umgeben ist, und mit einem in Richtung seiner Längsachse (13) durchströmbaren Separator (1) für ein Dampf-Wasser-Gemisch, wobei der Separator (1)
a) einen Einströmbereich (2), einen in Richtung der Längsachse (13) folgenden Separationsbereich (6), einen nachfolgenden Ausströmbereich (4),
b) einen im Einströmbereich (2) angeordneten Einlaß (8),
c) einen mit dem Ausströmbereich (4) strömungstechnisch verbundenen Auslaß (14) für den separierten Dampf (v) und
d) eine mit dem Ausströmbereich (4) strömungstechnisch verbundene und vom Auslaß (14) radial beabstandete Abströmöffnung (17) für das separierte Wasser (w)
aufweist, wobei der Einlaß (8) eine Drallstruktur (40) zum Erzeugen einer Drallströmung im Separationsbereich (6) aufweist,
**dadurch gekennzeichnet,**
- **daß** der Einlaß (8) mit der Drallstruktur (40) im Kernbereich (12) angeordnet ist, und dazu vorgesehen ist, das Dampf-Wasser-Gemisch mit einer zur Längsachse (13) radialen Strömungskomponente einströmen zu lassen.

2. Kernkraftanlage nach Anspruch 1, bei der der Separator (1) im Einströmbereich (2), im Separationsbereich (6) und im Ausströmbereich (4) eine einzige Begrenzungswand (20) aufweist.

3. Kernkraftange nach Anspruch 1 oder 2, bei der der Einlaß (3) des Separators (1) eine sich im wesentlichen senkrecht zur Längsachse (13) erstreckende Barriere, insbesondere ein Prallelement (42), sowie zumindest eine seitliche Öffnung (43) aufweist.

4. Kernkraftanlage nach einem der Ansprüche 1 bis 3, bei der die Drallstruktur (40) des Separators (1) ein Prallelement (42) umfaßt, das senkrecht zur Längsachse (13) eine Querschnittsfläche aufweist und in Richtung der Längsachse (13) strömungstechnisch vor dem Separationsbereich (6) angeordnet und von ihm durch Leitelemente (50) axial beabstandet ist, die sich zur Erzeugung der Drallströmung von einem äußeren Umfang (52) bis zu einem inneren Umfang (54) in Richtung der Längsachse (13) erstrecken.

5. Kernkraftanlage nach Anspruch 4, bei der der innere Umfang (54) und der äußere Umfang (52) zentrisch um die Längsachse (13) angeordnete Kreise mit einem inneren Radius (R1) und einem äußeren Radius (R2) sind.

6. Kernkraftanlage nach Anspruch 5, bei der die Leitelemente (50) jeweils mit derjenigen Mittelpunktsgeraden (57), deren Schnittpunkt (P) mit dem inneren Kreis (54A) zugleich dem auf den inneren Kreis (54A) projizierten Endpunkt(B) des jeweiligen Leitelements (50) entspricht, an dem Endpunkt (B) einen Winkel α im Bereich von etwa 75 ° bis 90 ° einschließen.

7. Kernkraftanlage nach Anspruch 5, bei der der innere Radius (R1) weitgehend mit dem Abstand der Längsachse (13) zu einem Grenzbereich (26) zwischen Wasser (w) und Dampf (v) im Separationsbereich (6) übereinstimmt, wenn der Separationsbereich (6) mit Nennlast durchströmt wird.

8. Kernkraftanlage nach einem der Ansprüche 1 bis 7, bei der die Abströmöffnung (17) des Separators (1) einen Ringspalt aufweist.

9. Kernkraftanlage nach einem der Ansprüche 1 bis 8, bei der der Auslaß (14) des Separators (1) zentrisch um die Längsachse (13) angeordnet ist.

10. Kernkraftanlage nach einem der Ansprüche 1 bis 9, bei der der Auslaß (14) des Separators (1) ein sich in Richtung der Längsachse (13) erstreckendes Abströmrohr (16) umfaßt.

11. Kernkraftanlage nach einem der Ansprüche 1 bis 10, bei der der Separator (1) quer zu der Längsachse (13) teilbar ist.

12. Kernkraftanlage nach einem der Ansprüche 1 bis 11, bei der der Auslaß (14) und/oder die Abströmöffnung (17) Mittel zur Erhöhung des Strömungswiderstandes aufweisen.

13. Kernkraftanlage mit einer Mehrzahl von Separatoren (1) nach einem der Ansprüche 1 bis 12, wobei die Separatoren (1) strömungstechnisch parallel geschaltet nebeneinander angeordnet sind.

14. Kernkraftanlage nach Anspruch 13, wobei eine erste Anzahl der Separatoren (1) Drallstrukturen (40) mit einem Drehsinn im Uhrzeigersinn und eine zweite Anzahl der Seperatoren (1) Drallstrukturen (40) mit einem Drehsinn gegen den Uhrzeigersinn aufweisen.

## Claims

1. Nuclear power plant, in particular boiling-water nuclear power plant, having a core area (12) surrounded by a core lid (11) and a core shroud (62), and having a separator (1) through which a steam-water mixture can flow in the direction of its longitudinal axis (13), the separator (1) including
a) an inflow area (2), a separation area (6) adjacent thereto in the direction of the longitudinal axis (13), an outflow area (4) adjacent thereto,
b) an inlet (8) arranged in the inflow area (2),
c) an outlet (14) for the separated steam (v), fluidically connected with the outflow area (4), and
d) an escape opening (17) for the separated water (w), fluidically connected with the outflow area (4) and arranged at a radial distance from the outlet (14),
the inlet (8) having a swirl structure (40) for generating a swirl flow in the separation area (6),
**characterized in**
**that** the inlet (8) with the swirl structure (40) is arranged in the core area (12) and is provided for letting the steam-water mixture flow in with a flow component radial to the longitudinal axis (13).

2. Nuclear power plant according to claim 1, in which the separator (1) includes a single boundary wall (20) in the inflow area (2), in the separation area (6) and in the outflow area (4).

3. Nuclear power plant according to claim 1 or 2, in which the inlet (8) of the separator (1) includes a barrier, in particular a deflector (42), extending substantially perpendicularly to the longitudinal axis (13), as well as at least one lateral opening (43).

4. Nuclear power plant according to any of claims 1 to 3, in which the swirl structure (40) of the separator (1) includes a deflector (42) including a cross-sectional surface situated perpendicularly to the longitudinal axis (13) and fluidically arranged, in the direction of the longitudinal axis (13), in front of the separation area (6) and arranged at an axial distance from said separation area (6) through guiding elements (50) which extend from an outer perimeter (52) to an inner perimeter (54) in the direction of the longitudinal axis (13).

5. Nuclear power plant according to claim 4, in which the inner perimeter (54) and the outer perimeter (52) are circles centrically arranged around the longitudinal axis (13) with an inner radius (R1) and an outer radius (R2).

6. Nuclear power plant according to claim 5, in which each of the guiding elements (50) includes at the end point (B) an angle α in the range of approx. 75° to 90° with that straight line (57) passing through the center of the circles whose point of intersection (P) with the inner circle (54A) is identical with the end point (B) of the corresponding guiding element (50) projected onto the inner circle (54A).

7. Nuclear power plant according to claim 5, in which the inner radius (R1) corresponds to a great extent to the distance between the longitudinal axis (13) and a limit area (26) between water (w) and steam (v) in the separation area (6), when the separation area (6) is traversed with the rated load.

8. Nuclear power plant according to any of claims 1 to 7, in which the escape opening (17) of the separator (1) includes an annular gap.

9. Nuclear power plant according to any of claims 1 to 8, in which the outlet (14) of the separator (1) is arranged centrically around the longitudinal axis (13).

10. Nuclear power plant according to any of claims 1 to 9, in which the outlet (14) of the separator (1) includes an escape pipe (16) extending in the direction of the longitudinal axis (13).

11. Nuclear power plant according to any of claims 1 to 10, in which the separator (1) is divisible across the longitudinal axis (13).

12. Nuclear power plant according to any of claims 1 to 11, in which the outlet (14) and/or the escape opening (17) include means for increasing the flow resistance.

13. Nuclear power plant having a plurality of separators (1) according to any of claims 1 to 12, in which the separators (1) are fluidically arranged side by side in parallel connection.

14. Nuclear power plant according to claim 13, a first number of separators (1) including swirl structures (40) with a clockwise direction of rotation and a second number of separators (1) including swirl structures (40) with an anticlockwise direction of rotation.

## Revendications

1. Centrale nucléaire, en particulier centrale nucléaire à eau bouillante, avec une zone du coeur (12) entourée par une couvercle du coeur (11) et une enveloppe du coeur (62) et avec un séparateur (1) à travers lequel un mélange vapeur/eau peut couler dans la direction de son axe longitudinal (13), le séparateur (1) comprenant
a) une zone d'afflux (2), une zone de séparation (6) adjacente à celle-ci dans la direction de l'axe longitudinal (13), une zone d'écoulement (4) adjacente à cette dernière,
b) une entrée (8) disposée dans la zone d'afflux (2),
c) une sortie (14) pour la vapeur (v) séparée, connectée fluidiquement avec la zone d'écoulement (4), et
d) un orifice d'échappement (17) pour l'eau (w) séparée, connecté fluidiquement avec la zone d'écoulement (4) et disposé à distance radiale de la sortie (14),
l'entrée (8) ayant une structure tourbillonnaire (40) pour générer un flux tourbillonnaire dans la zone de séparation (6),
**caractérisée en ce**
**que** l'entrée (8) avec la structure tourbillonnaire (40) est disposée dans la zone du coeur (12) et est prévue pour laisser le mélange vapeur/eau entrer avec une composante de flux radiale à l'axe longitudinal (13).

2. Centrale nucléaire selon la revendication 1, dans laquelle le séparateur (1) comprend une seule paroi de limitation (20) dans la zone d'afflux (2), dans la zone de séparation (6) et dans la zone d'écoulement (4).

3. Centrale nucléaire selon la revendication 1 ou 2, dans laquelle l'entrée (8) du séparateur (1) comprend une barrière, en particulier un déflecteur (42), s'étendant substantiellement perpendiculairement à l'axe longitudinal (13), ainsi qu'au moins un orifice latéral (43).

4. Centrale nucléaire selon l'une quelconque des revendications 1 to 3, dans laquelle la structure tourbillonnaire (40) du séparateur (1) comprend un déflecteur (42) comprenant une superficie de la section située perpendiculairement à l'axe longitudinal (13) et disposée fluidiquement, dans la direction de l'axe longitudinal (13), devant la zone de séparation (6) et disposée à une distance axiale de la zone de séparation (6) par des éléments de guidage (50) qui s'étendent d'un périmètre extérieur (52) à un périmètre intérieur (54) dans la direction de l'axe longitudinal (13).

5. Centrale nucléaire selon la revendication 4, dans laquelle le périmètre intérieur (54) et le périmètre extérieur (52) sont des cercles disposés centriquement autour de l'axe longitudinal (13) avec un rayon intérieur (R1) et un rayon extérieur (R2).

6. Centrale nucléaire selon la revendication 5, dans laquelle chacun des éléments de guidage (50) inclut au point final (B) un angle α dans la gamme d'environ 75° à 90° avec la ligne droite (57) passant par le centre des cercles dont le point d'intersection (P) avec le cercle intérieur (54A) est identique au point final (B) de l'élément de guidage (50) correspondant projeté sur le cercle intérieur (54A).

7. Centrale nucléaire selon la revendication 5, dans laquelle le rayon intérieur (R1) correspond largement à la distance entre l'axe longitudinal (13) et une zone limite (26) entre l'eau (w) et la vapeur (v) dans la zone de séparation (6), quand la zone de séparation (6) est traversée par la charge nominale.

8. Centrale nucléaire selon l'une quelconque des revendications 1 à 7, dans laquelle l'orifice d'échappement (17) du séparateur (1) comprend un interstice annulaire.

9. Centrale nucléaire selon l'une quelconque des revendications 1 à 8, dans laquelle la sortie (14) du séparateur (1) est disposée centriquement autour de l'axe longitudinal (13).

10. Centrale nucléaire selon l'une quelconque des revendications 1 à 9, dans laquelle la sortie (14) du séparateur (1) comprend un tuyau d'échappement (16) s'étendant dans la direction de l'axe longitudinal (13).

11. Centrale nucléaire selon l'une quelconque des revendications 1 à 10, dans laquelle le séparateur (1) est divisible transversalement à l'axe longitudinal (13).

12. Centrale nucléaire selon l'une quelconque des revendications 1 à 11, dans laquelle la sortie (14) et/ou l'orifice d'échappement (17) comprend des moyens pour augmenter la résistance d'écoulement.

13. Centrale nucléaire ayant une pluralité de séparateurs (1) selon l'une quelconque des revendications 1 à 12, dans laquelle les séparateurs (1) sont disposés fluidiquement l'un à côté de l'autre, connectés en parallèle.

14. Centrale nucléaire selon la revendication 13, un premier nombre de séparateurs (1) comprenant des structures tourbillonnaires (40) avec un sens de rotation en sens horaire et un second nombre de séparateurs (1) comprenant des structures tourbillonnaires (40) avec un sens de rotation en sens antihoraire.
